# EUROPÄISCHE PATENTSCHRIFT

(11) **EP 1 252 791 B1**
(45) Veröffentlichungstag und Bekanntmachung des Hinweises auf die Patenterteilung: **12.08.2009**
(21) Anmeldenummer: 00987066.8
(22) Anmeldetag: 02.11.2000
(51) Int. Cl.: H04Q 11/00

(54) **OPTISCHER CROSSCONNECT**
OPTICAL CROSS-CONNECT
REPARTITEUR OPTIQUE

(30) Priorität: 31.01.2000 DE 10004082
(43) Veröffentlichungstag der Anmeldung: 30.10.2002
(73) Patentinhaber: Nokia Siemens Networks GmbH & Co. KG, 81541 München (DE)
(72) Erfinder: JÄGER, Hubert, 82049 Pullach (DE); JAHREIS, Oliver, 80687 München (DE)
(86) Internationale Anmeldenummer: PCT/DE2000/003853
(87) Internationale Veröffentlichungsnummer: WO 2001/058202

(56) Entgegenhaltungen:
- DE-C- 4 314 354
- US-A- 5 448 574
- AKIRA HIMENO ET AL: "PHOTONIC INTER-MODULE CONNECTOR USING 8 X 8 OPTICAL SWITCHES FOR NEAR-FUTURE ELECTRONIC SWITCHING SYSTEMS" IEICE TRANSACTIONS ON COMMUNICATIONS,INSTITUTE OF ELECTRONICS INFORMATION AND COMM. ENG. TOKYO,JP, Bd. E77-B, Nr. 2, 1. Februar 1994 (1994-02-01), Seiten 155-162, XP000447106 ISSN: 0916-8516

## Beschreibung

Die Erfindung betrifft einen optischen Crossconnect mit zumindest einem optische Eingänge und Ausgänge aufweisenden steuerbaren Schaltmodul.

Optische Übertragungsnetze auf der Basis hochbitratiger, fasergebundener Übertragungsstrecken mit optischen Crossconnects und gegebenenfalls auch mit optischen Frequenzmultiplex stellen das zukünftige Transportnetz zur Übertragung hoher Datenmengen für die zukünftige Telekommunikation dar.

Das zu erwartende Wachstum im Bereich der Datenübertragung über optische Übertragungsnetze, insbesondere durch die Zunahme an Internetzugangsanbietern und Internetbenutzern, macht es erforderlich, derartige optische Übertragungsnetze möglichst einfach skalierbar für Ihre Betreiber zu gestalten, d.h. die Ausbaufähigkeit eines optischen Crossconnects bzw. die Anbindung von zusätzlichen Benutzern mit unterschiedlichsten Verbindungsanforderungen muß äußerst flexibel und innerhalb kürzester Zeit mit einem angemessenen technischen Aufwand realisierbar sein.

Hierbei werden bei den als faseroptische Verteiler ausgestalteten optischen Crossconnects optische Verbindungen derart realisiert, daß in den jeweiligen optischen Crossconnects manuell optische Verbindungen beispielsweise durch eine optische Steckverbindung durchgeschaltet werden. Hierzu werden üblicherweise zwei jeweils einen Steckeranschluß aufweisende, optische Leiter über eine derartige optische Steckerverbindung miteinander verbunden, wobei die optische Steckerverbindung einen optischen Verbindungsleiter und zwei jeweils an den Enden des optischen Verbindungsleiters angebrachte Stecker aufweist. Die Stecker des optischen Verbindungsleiters werden in die optischen Anschlüsse der zu verbindenden optischen Leiter gesteckt und letztendlich dadurch eine optische Verbindung zwischen einem ersten optischen Leiter bzw. eine Zuleitungsfaser und einem zweiten optischen Leiter bzw. eine Ableitungsfaser erstellt. Zur Reduzierung der Wahrscheinlichkeit einer manuellen, fehlerhaften Konfiguration der optischen Verbindung bzw. des optischen Steckanschlusses ist aus der am 30.11.2000 veröffentlichen DE 19920452 eine optische Steckverbindung bekannt, die zusätzlich zu der optischen Steckverbindung eine elektrische Verbindung zur Verifizierung der optischen Steckverbindung aufweist. Hierbei wird mit Hilfe der zusätzlichen elektrischen Verbindung die Konfiguration der optischen Steckverbindung unmittelbar beim Erstellen der optischen Verbindung dem Netzmanagementsystem angezeigt. Desweiteren kann durch das Netzmanagementsystem jeweils bei Bedarf der aktuelle Konfigurationszustand der jeweiligen optischen Steckverbindung ermittelt werden. Derartige als faseroptische Verteiler ausgestaltete optische Crossconnects weisen jedoch keine Steuerungsmöglichkeiten über eine zentrale Steuereinheit bzw. das Netzmanagementsystem auf, wodurch für das Erstellen einer optischen Verbindung ein enormer sowohl zeitlicher und wirtschaftlicher Aufwand durch hierfür notwendige manuelle Eingriffe durch Fachpersonal am optischen Crossconnect entsteht. Aus diesem Grund werden über einen derartig aufgebauten optischen Crossconnect überwiegend statische Verbindungen aufgebaut, um den wirtschaftlichen Aufwand für die manuelle Konfiguration des optischen Crossconnects so gering wie möglich zu halten.

Zum Erstellen von dynamischen optischen Verbindungen, d.h. optische Verbindungen die beispielsweise innerhalb eines Tages mehrfach umkonfiguriert werden, sind steuerbare optische Crossconnects bzw. Schaltmodule bekannt - siehe hierzu insbesondere DE 4314354, bei denen Schaltmatrizen mit Hilfe von optischen Schaltern realisiert sind. Hiermit können optische Verbindungen über ein Netzmanagementsystem elektronisch geschaltet werden, wodurch das oft zeitintensive händische "Stecken" einer optischen Verbindung entfällt. Nachteilig ist jedoch, daß ein Ausbau, d.h. eine Erhöhung der optischen Schnittstellen des optischen automatisch steuerbaren Crossconnects bzw. Schaltmoduls, nur durch einen unverhältnismäßig gesteigerten gerätetechnischen Aufwand realisierbar wird. Wird beispielsweise eine Verdopplung der Anzahl der optischen Schnittstellen eines steuerbaren optischen Crossconnects angestrebt, so muß, um eine Mindest-Blockierungsfreiheit des steuerbaren Schaltmoduls zu gewährleisten, eine Kaskadierung von optischen Schaltmodulen der Schaltmatrix durchgeführt werden. Ein solche Kaskadierung zur Verdopplung der optischen Schnittstellen kann unter Umständen - abhängig von der geforderten Blockierungsfreiheit des steuerbaren Schaltmoduls - zu mehr als einer Vervierfachung der optischen Schaltmodule führen. Zusätzlich wird durch die Kaskadierung von optischen Schaltmodulen die Durchlaßdämpfung des optischen Crossconnects erhöht, so daß eine zusätzliche Regeneration des über den optischen Crossconnect bzw. die Kaskade von steuerbaren Schaltmodulen übermittelten optischen Signals erforderlich werden kann.

Die Aufgabe der vorliegenden Erfindung besteht darin, einen optischen Crossconnect der eingangs erwähnten Art derart auszugestalten, daß der gerätetechnische Aufwand zum wahlfreien Schalten von optischen Verbindungen zwischen den Ein- und Ausgängen eines optischen Crossconnects reduziert wird. Die Aufgabe wird ausgehend von einem optischen Crossconnect gemäß den Merkmalen des Oberbegriffs des Patentanspruches 1 durch dessen kennzeichnende Merkmale gelöst.

Der wesentliche Aspekt des erfindungsgemäßen optischen Crossconnects ist darin zu sehen, daß ein über ein Netzmanagementsystem überwachbarer, externe und interne optische Verteilereingänge und Verteilerausgänge aufweisender Verteilerrahmen vorgesehen ist, dessen externe und internen optischen Verteilereingänge und Verteilerausgänge innerhalb des Verteilerrahmens über mehrere jeweils einen zusätzlichen elektrischen Leiter zur Verifizierung der optischen Verbindung aufweisende optische Verbindungsleiter verbindbar sind. Desweiteren sind erfindungsgemäß mehrere der internen optischen Verteilerausgänge an die Eingänge des steuerbaren Schaltmoduls und die Ausgänge des steuerbaren Schaltmoduls an mehrere interne optische Verteilereingänge geführt, wobei das steuerbare Schaltmodul unter Berücksichtigung der durch das Netzmanagementsystem verifizierten optischen Verbindungen gesteuert wird. Vorteilhaft wird durch die Verifizierung der geschalteten bzw. gesteckten optischen Verbindung innerhalb des Verteilerrahmens durch das Netzmanagementsystem eine aktuelle Information über die Konfiguration des optischen Crossconnects ermittelt, welche für die Steuerung des steuerbaren Schaltmoduls eingesetzt werden kann. Somit können durch den das Netzmanagementsystem bedienenden Netzadministrator auch dynamische Verbindungen innerhalb kürzester Zeit durchgeschaltet werden, ohne das durch das Servicepersonal am meist mehrere Kilometer entfernt installierten optischen Crossconnect die hierfür erforderlichen optischen Steckverbindungen händisch erstellt werden müssen. Hierdurch kann abhängig vom Anteil der dynamischen optischen Verbindungen an der Gesamtzahl der über den optischen Crossconnect schaltbaren optischen Verbindungen die Anzahl der automatisch steuerbaren Schaltmodule bzw. optischen Schnittstellen bedarfsgerecht gesteuert werden, d.h. erhöht sich der Bedarf an automatisch steuerbaren optischen Schnittstellen im optischen Crossconnect, so können weitere steuerbare Schaltmodule zwischen die internen Verteilereingänge und Verteilerausgänge des Verteilerrahmens eingeschaltet werden. Somit kann besonders vorteilhaft beim erfindungsgemäßen optischen Crossconnect mit nur geringem gerätetechnischen Aufwand die Anzahl der schaltbaren optischen Verbindungen erhöht werden.

Gemäß einer weiteren Ausgestaltung der erfindungsgemäßen optischen Crossconnects liegen dem Netzmanagementsystem aufgrund der Verifizierung Informationen über die von externen optischen Verteilereingängen auf interne optische Verteilerausgänge und über die von internen optischen Verteilereingängen auf externe optische Verteilerausgänge geschalteten optischen Verbindungen vor, welche zur Steuerung des steuerbaren Schaltmoduls derartig berücksichtigt werden, daß zum automatischen Durchschalten einer optischen Verbindung von einem festgelegten externen optischen Verteilereingang auf einen festgelegten externen optischen Verteilerausgang mit Hilfe des Netzmanagementsystems der über eine optische Verbindung an dem festgelegten externen optischen Verteilereingang angeschlossene interne optische Verteilerausgang und der über eine weitere optische Verbindung an den festgelegten externen optischen Verteilerausgang angeschlossene interne optische Verteilereingang ermittelt wird und mit Hilfe des steuerbaren Schaltmoduls der ermittelte interne optische Verteilerausgang auf den ermittelten internen Verteilereingang durchgeschaltet wird - Anspruch 2. Vorteilhaft wird durch das Netzmanagementsystem für einen Verbindungswunsch zwischen einem externen optischen Verteilereingang und einem externen optischen Verteilerausgang bzw. an diesen angeschlossenen Zu-/Ableitungsfasern jeweils die aktuelle optische Verbindung zu dem jeweiligen internen optischen Verteilereingang bzw. -ausgang ermittelt und anschließend über das steuerbare Schaltmodul die gewünschte Verbindung durchgeschaltet. Dadurch können besonders vorteilhaft dynamische optische Verbindungen von einer optischen Zuleitungsfaser wahlweise auf unterschiedliche optische Ableitungsfasern geschaltet werden, wobei hierbei durch das Netzmanagementsystem vor dem Schaltvorgang jeweils eine Überwachung der intern geschalteten optischen Verbindung durchgeführt werden kann.

Erfindungsgemäß weist der optische Crossconnect optische Schnittstellen auf, die zum Anschluß der externen optischen Verteilereingänge des Verteilerrahmens an optische Zuleitungsfasern und der externen optischen Verteilerausgänge an optische Ableitungsfasern vorgesehen sind - Anspruch 3. Desweiteren sind erfindungsgemäß die externen und internen optischen Verteilereingänge und Verteilerausgänge des Verteilerrahmens als kombinierte opto-elektrische Anschlüsse ausgestaltet -Anspruch 4. Durch die erfindungsgemäße Ausgestaltung der externen und internen optischen Verteilereingänge und Verteilerausgänge als kombinierte opto-elektrische Anschlüsse wird dem Netzmanagementsystem die aktuelle Konfiguration der gesteckten optischen Verbindungen im Verteilerrahmen zugänglich, d.h. im Verteilerrahmen ist die zusätzlich zur optischen Verbindung aufgebaute elektrische Verbindung durch das Netzmanagementsystem überwachbar.

Gemäß einer weiteren Ausgestaltung des optischen Crossconnects sind zur Erweiterung der automatisch steuerbaren optischen Schnittstellen des optischen Crossconnects zusätzlich mehrere steuerbare Schaltmodule parallel und/oder in Serie schaltbar - Anspruch 6. Durch die erfindungsgemäße Parallelschaltung von mehreren steuerbaren Schaltmodulen kann die Anzahl der durch das Netzmanagementsystem dynamisch schaltbaren optischen Verbindungen innerhalb des optischen Crossconnect mit einem minimierten gerätetechnischen Aufwand realisiert werden. Zusätzlich kann durch den erfindungsgemäßen Anschluß der steuerbaren Schaltmodule an interne optische Verteilereingänge und Verteilerausgänge besonders vorteilhaft bei einer Erweiterung des optischen Crossconnects um mehrere steuerbare Schaltmodule die Anschlußkonfiguration der Zu-/Ableitungsfasern beibehalten werden, d.h. die Beschaltung der externen optischen Verteilereingänge und Verteilerausgänge kann beibehalten werden und die für die Erweiterung erforderliche Umkonfiguration der optischen Verbindungen innerhalb des Verteilerrahmens wird an den internen optischen Verteilereingängen und Verteilerausgängen und im Netzmanagementsystem vorgenommen. Hierdurch wird die Migration von sogenannten "High Dynamic Islands" innerhalb eines bestehenden optischen Crossconnects durch einen erheblich reduzierten gerätetechnischen Aufwand realisierbar.

Vorteilhafte Weiterbildungen und Ausbildungen des erfindungsgemäßen optischen Crossconnects sind in den weiteren Patentansprüchen beschrieben.

Die Erfindung soll im folgenden anhand von zwei Prinzipschaltbildern näher erläutert werden.
- Figur 1: zeigt den prinzipiellen Aufbau des erfindungsgemäßen optischen Crossconnects,
- Figur 2: zeigt eine Erweiterung des optischen Crossconnects um ein zweites steuerbares Schaltmodul.

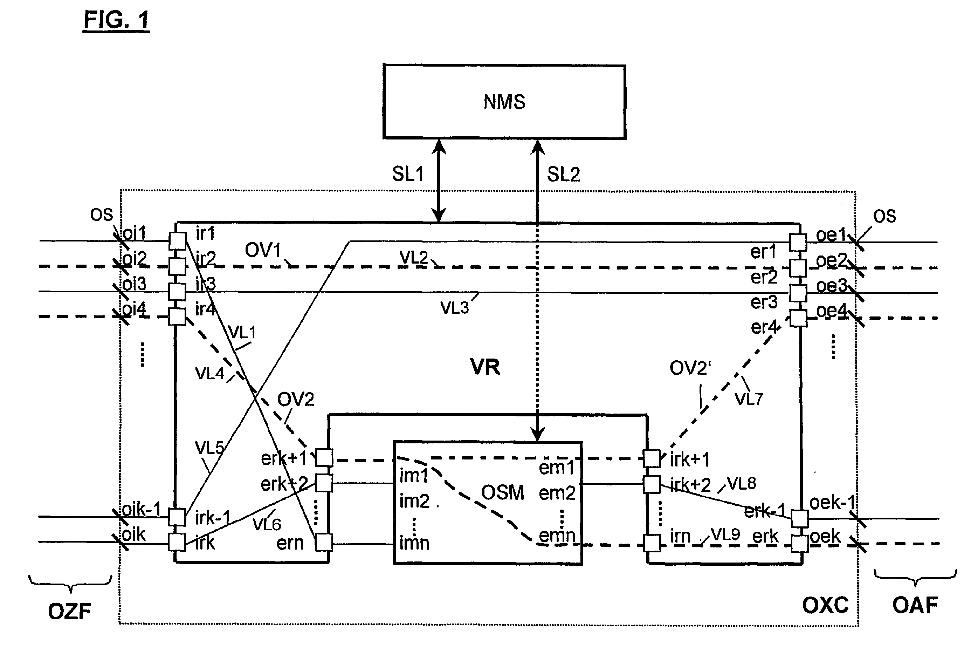

In Figur 1 ist beispielhaft der prinzipielle Aufbau des erfindungsgemäßen optischen Crossconnects OXC dargestellt, der über erste und zweite Steuerleitungen SL1,SL2 mit einem Netzmanagementsystem NMS verbunden ist. Der optische Crossconnect OXC weist eine Vielzahl optischer Zuleitungsanschlüsse oil bis oik sowie eine Vielzahl optischer Ableitungsanschlüsse oe1 bis oek auf, an die jeweils über optische Schnittstellen OS optische Zuleitungsfasern OZF bzw. optische Ableitungsfasern OAF angeschlossen sind.

Desweiteren ist der optische Crossconnect OXC erfindungsgemäß aus einem optische Eingänge im1 bis imn und Ausgänge em1 bis emn aufweisenden steuerbaren Schaltmodul OSM und einem externe und interne optische Verteilereingänge ir1 bis irk und irk+1 bis irn und Verteilerausgänge er1 bis erk und erk+1 bis ern aufweisenden Verteilerrahmen VR aufgebaut, wobei der Verteilerrahmen VR über die ersten Steuerleitungen STL1 und das steuerbare Schaltmodul OSM über die zweiten Steuerleitungen SL2 an das Netzmanagementsystem NMS angeschlossen sind. Die externen und internen optischen Verteilereingänge ir1 bis irk und irk+1 bis irn und Verteilerausgänge er1 bis erk und erk+1 bis ern des Verteilerrahmens VR sind erfindungsgemäß als kombinierte opto-elektrische Anschlüsse ausgestaltet und sind somit über das Netzmanagementsystem NMS verifizierbar, d.h. durch das Netzmanagementsystem NMS kann - wie in der deutschen Patentanmeldung DE 19920452 "Optische Steckverbindung" beschrieben - der jeweilige optische Verteilereingang ir1 bis irk und irk+1 bis irn bzw. Verteilerausgang er1 bis erk und erk+1 bis ern hinsichtlich seiner aktuellen Konfiguration überprüft werden. Somit liegen im Netzmanagementsystem NMS immer die aktuellsten Konfigurationsdaten bzw. Verbindungsdaten für die externen und internen optischen Verteilereingänge ir1 bis irk und irk+1 bis irn und Verteilerausgänge er1 bis erk und erk+1 bis ern des Verteilerrahmens VR des jeweiligen optischen Crossconnects OXC vor, d.h. das Netzmanagementsystem NMS "weiß" welcher externe und interne optische Verteilereingang ir1 bis irk und irk+1 bis irn bzw. Verteilerausgang er1 bis erk und erk+1 bis ern belegt ist und an welchen weiteren externen und internen optischen Verteilerausgang er1 bis erk und erk+1 bis ern bzw. Verteilereingang ir1 bis irk und irk+1 bis irn dieser angeschlossen ist. In dem in Figur 1 dargestellten Ausführungsbeispiel sind die externen optischen Verteilereingänge ir1 bis irk an die Zuleitungsanschlüsse oi1 bis oik geführt und die externen optischen Verteilerausgänge er1 bis erk an die Ableitungsanschlüsse oe1 bis oek geführt. Die internen optischen Verteilereingänge irk+1 bis irn sind an die Ausgänge em1 bis emn des steuerbaren Schaltmoduls OSM und die internen Verteilerausgänge erk+1 bis ern an die Eingänge im1 bis imn des steuerbaren Schaltmoduls OSM angeschlossen, wobei bei dem in Figur 1 dargestellten Ausführungsbeispiel beispielhaft sämtliche internen Verteilereingänge irk+1 bis irn und Verteilerausgänge erk+1 bis ern mit dem steuerbaren Schaltmodul OSM verbunden sind, welches kein zwingendes Erfordernis darstellt.

Desweiteren sind die externen optischen Verteilereingänge ir1 bis irk innerhalb des optischen Verteilerrahmens VR über optische Verteilerleiter VL1 bis VL8 - gemäß den in DE 19920452 beschriebenen optischen Steckverbindungen - mit externen oder internen optischen Verteilerausgängen er1 bis ern verbunden, d.h. zur Verifizierung einer optischen Verbindung OV ist zusätzlich eine elektrische Verbindung vorgesehen. Hierbei ist beispielhaft in Figur 1 ein erster externer Verteilereingang ir1 über einen ersten Verbindungsleiter VL1 mit dem n-ten internen Verteilerausgang ern, ein zweiter externer Verteilereingang ir2 über einem zweiten Verteilerleiter VL2 mit einem zweiten externen Verteilerausgang er2, ein dritter externer Verteilereingang ir3 über einen dritten Verteilerleiter VL3 mit einem dritten externen Verteilerausgang er3 sowie ein vierter externer Verteilereingang ir4 über einen vierten Verteilerleiter VL4 mit einem k+1-ten internen Verteilerausgang erk+1 verbunden. Zusätzlich ist bei dem in Figur 1 dargestellten erfindungsgemäßen optischen Crossconnect OXC ein k-1-ter externer Verteilereingang irk-1 über einen fünften Verteilerleiter VL5 mit dem ersten externen Verteilerausgang er1, ein k-ter externer Verteilereingang irk über einen sechsten Verteilerleiter VL6 mit dem k+2-ten internen Verteilerausgang erk+2, ein k+1-ter interner Verteilereingang irk+1 über einen siebten Verteilerleiter VL7 mit einem vierten externen Verteilerausgang er4, ein k+2-ter interner Verteilereingang irk+2 über einen achten Verteilerleiter VL8 mit einem k-1-ten externen Verteilerausgang erk-1 sowie ein n-ter interner Verteilereingang irn über einen neunten Verteilerleiter VL9 mit einem k-ten externen Verteilerausgang erk verbunden.

Erfindungsgemäß weist der optische Crossconnect OXC zusätzlich mindestens ein steuerbares Schaltmodul OSM auf, mit dessen Hilfe durch das Netzmanagementsystem NMS - ohne einen händischen Eingriff vorzunehmen - optische Verbindungen OV zwischen einer optischen Zuleitungsfaser OZF und einer optischen Ableitungsfaser OAF geschaltet werden können, wobei erfindungsgemäß beim Aufbau einer optischen Verbindung OV über das steuerbare Schaltmodul OSM zunächst innerhalb des optischen Verteilerrahmens VR zwischen einem an das steuerbare Schaltmodul OSM angeschlossenen internen optischen Verteilerausgang erk+1 bis ern und einem an eine der optischen Schnittstellen OS geführten externen Verteilereingang ir1 bis irk hergestellt wird. Desweiteren wird zumindest eine weitere interne optische Verbindung OV von einem der an das steuerbare Schaltmodul OSM angeschlossenen internen Verteilereingänge irk+1 bis irn zu einem der an die optischen Schnittstellen OS geführten externen Verteilerausgänge er1 bis erk "gesteckt". Nun kann durch das Netzmanagementsystem NMS eine optische Verbindung OV zwischen einem an das steuerbare Schaltmodul OSM angeschlossenen internen Verteilerausgang erk+1 bis ern über das steuerbare Schaltmodul OSM mit einem der an das steuerbare Schaltmodul OSM angeschlossenen internen Verteilereingänge irk+1 bis irn geschaltet werden, wodurch eine vollständige optische Verbindung OV von einer optischen Zuleitungsfaser OZF zu einer optischen Ableitungsfaser OAF durchgeschaltet ist.

In Figur 1 sind beispielhaft eine erste und eine zweite optische Verbindung OV1,OV2 als strichliert gezeichneten Linie dargestellt, wobei die erste optische Verbindung OV1 als Realisierung einer statischen optischen Verbindung und die zweite optische Verbindung OV2 als Realisierung einer dynamischen, d.h. über das Netzmanagement steuerbaren, optischen Verbindung vorgesehen ist. So ist beispielsweise die in Figur 1 dargestellte zweite optische Verbindung OV2 vom vierten externen optischen Verteilereingang ir4 über den k+1-ten internen optischen Verteilerausgang erk+1 zum ersten Eingang im1 des steuerbaren Schaltmoduls OSM geschaltet. In dem steuerbaren Schaltmodul OSM werden dessen optischen Schalter durch das Netzmanagementssystem NMS derart eingestellt, daß das am ersten Eingang im1 anliegende optische Signal zum n-ten Ausgang emn umgelenkt wird. Vom n-ten Ausgang emn des steuerbaren Schaltmoduls OSM verläuft die zweite optische Verbindung OV2 über den n-ten internen optischen Verteilereingang irn zum k-ten externen optischen Verteilerausgang erk, der an den k-ten optischen Ableitungsanschluß oek und somit an eine optische Ableitungsfaser angeschlossen ist.

Da die zweite optische Verbindung OV2 als dynamische optische Verbindung realisiert ist, kann beispielsweise während des Nachtbetriebes des optischen Crossconnects OXC die zweite optische Verbindung OV2 durch das von Netzmanagementsystem NMS gesteuertete Schaltmodul OSM umkonfiguriert werden. Hierzu werden die optischen Schalter des steuerbaren Schaltmoduls OSM derartig umgeschaltet, daß ein am ersten Eingang im1 des steuerbaren Schaltmoduls OSM anliegendes optisches Signal nun beispielsweise zum ersten Ausgang em1 des steuerbaren Schaltmoduls OSM umgelenkt wird, welcher seinerseits an den k+1-ten internen optsichen Verteilereingang irk+1 des optischen Verteilerrahmens VR angeschlossen ist. Vom k+1-ten internen optischen Verteilereingang irk+1 besteht über den siebten Verteilerleiter VL7 eine optische Verbindung OV2' zum vierten externen optischen Verteilerausgang er4 des optischen Verteilerrahmens VR, der mit dem vierten Ableitungsanschluß oe4 des optischen Crossconnects verbunden ist. Somit kann beispielsweise ein Kunde, der über eine an den vierten Zuleitungsanschluß oi4 geführte optische Zuleitungsfaser OZF an den optischen Crossconnext OXC angeschlossen ist, tagsüber an eine an den k-ten Ableitungsanschluß oek über eine Ableitungsfaser OAF angeschlossenes Datennetz angeschaltet werden, während derselbe Kunde Nachts mit einem an den vierten Ableitungsanschluß oe4 über eine Ableitungsfaser OAF angeschlossen Datenserver verbunden wird, über den er eine tägliche Datensicherung durchführen kann - in Figur 1 mit Hilfe einer strichpunktierten Linie dargestellt. Durch den erfindungsgemäßen optischen Crossconnect OXC können somit äußerst flexibel und zuverlässig optische Verbindungen OV - sowohl statisch als auch dynamisch - geschaltet werden. Hierbei wird durch die erfindungsgemäße Realisierung eines optischen Crossconnects OXC eine erhebliche Reduzierung des beim Stand der Technik zur Realisierung von blockierungsfreien automatisch steuerbaren optischen Crossconnects OXC erforderlichen gerätetechnischen Aufwandes erzielt. Desweiteren ist besonders vorteilhaft eine Überwachung der geschalteten optischen Verbindungen OV durch das Netzmanagementsystem NMS aufgrund der verifizierbaren optischen Verteilerleiter VL möglich, welches die Fehlerlokalisation bzw. den hierfür erforderlichen zeitlichen Aufwand erheblich reduziert.

Vorteilhaft kann der erfindungsgemäße Crossconnect OXC bei einem steigenden Bedarf an dynamisch steuerbaren optischen Verbindungen OV um zusätzliche schaltbare Schaltmodule OSM erweitert werden, welche parallel zu dem installierten steuerbaren optischen Schaltmodul OSM in den optischen Crossconnect bzw. den optischen Verteilerrahmen VR eingeschaltet werden. Hierdurch kann die Anzahl der wählbaren bzw. dynamisch schaltbaren optischen Verbindungen innerhalb des optischen Crossconnects erhöht werden.

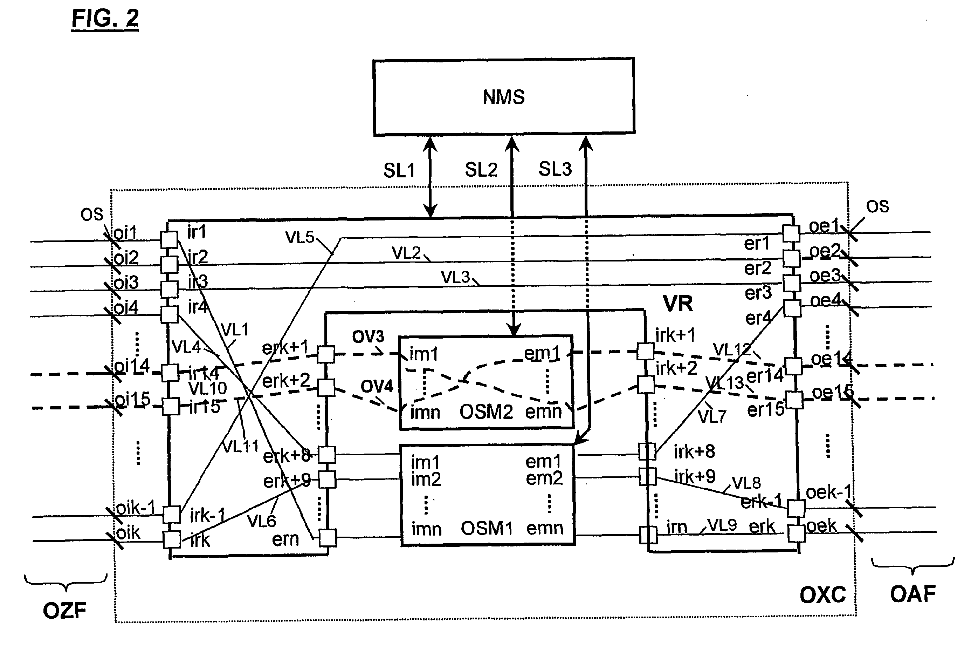

In Figur 2 ist beispielhaft eine Erweiterung des optischen Crossconnects OXC um ein weiteres steuerbares Schaltmodul OSM dargestellt, d.h. der optische Crossconnects OXC weist somit ein erstes und zweites optisches Schaltmodul OSM1, OSM2 auf. Analog zu dem in Figur 1 dargestellten optischen Crossconnect OXC ist der optische Verteilerrahmen VR über eine erste, das erste steuerbare Schaltmodul OSM1 über eine zweite sowie das zweite steuerbare Schaltmodul OSM2 über eine dritte Steuerleitung SL1,SL2,SL3 an das Netzmanagementsystem NMS angeschlossen. Desweiteren ist das zweite steuerbare Schaltmodul OSM2 baugleich mit dem ersten steuerbaren Schaltmodul OSM1, d.h. das erste steuerbare Schaltmodul OSM1 ebenso wie das zweite steuerbare Schaltmodul OSM2 weisen erste bis n-te Eingänge im1 bis imn und erste bis n-te Ausgänge em1 bis emn auf.

Im Unterschied zu Figur 1 ist in dem in Figur 2 dargestellten optischen Crossconnect OXC, der k+1-te interne optische Verteilerausgang erk+1 an den ersten Eingang im1 des zweiten steuerbaren Schaltmoduls OSM2, der k+2-te interne optische Verteilerausgang erk+2 an den n-ten Eingang imn des zweiten steuerbaren Schaltmoduls OSM2, der k+8-te interne optische Verteilerausgang erk+8 an den ersten Eingang im1 des ersten steuerbaren Schaltmoduls OSM1, der k+9-te interne optische Verteilerausgang erk+9 an den zweiten Eingang im2 des ersten steuerbaren Schaltmoduls OSM1 sowie der n-te interne optische Verteilerausgang ern an den n-ten Eingang imn des ersten steuerbaren Schaltmoduls OSM1 angeschlossen. Desweiteren ist der erste Ausgang em1 des zweiten steuerbaren Schaltmoduls OSM2 an den k+1-ten internen optischen Verteilereingang irk+1, der n-te Ausgang emn des zweiten steuerbaren Schaltmoduls OSM2 an den k+2-ten internen optischen Verteilereingang irk+2, der erste Ausgang em1 des ersten steuerbaren Schaltmoduls OSM1 an den k+8-ten internen optischen Verteilereingang irk+8, der zweite Ausgang em2 des ersten steuerbaren Schaltmoduls OSM1 an den k+9-ten internen optischen Verteilereingang irk+9 sowie der n-te Ausgang emn des ersten steuerbaren Schaltmoduls OSM1 an den n-ten internen optischen Verteilereingang irn geführt.

In Figur 2 ist zusätzlich zu den in Figur 1 geschalteten optischen Verbindungen OV beispielhaft eine dynamisch schaltbare dritte und vierte optische Verbindung OV3,OV4 dargestellt - in Figur 2 durch strichliert gezeichnete Verbindungen angedeutet, wobei die dritte optische Verbindung OV3 sich von einem vierzehnten Zuleitungsanschluß oi14 über einen zehnten optischen Verbindungsleiter VL10 zum k+1-ten internen optischen Verteilerausgang erk+1, der über den ersten Eingang im1 und den n-ten Ausgang emn des zweiten steuerbaren Schaltmoduls OSM2 wiederum an den k+2-ten internen optischen Verteilereingang irk+2 geführt ist, erstreckt. Die optische Verbindung vom k+2-ten internen optischen Verteilereingang irk+2 über einen dreizehnten optischen Verteilerleiter VL13 zum fünfzehnten externen optischen Verteileranschluß er15 bzw. zum fünfzehnten optischen Ableitungsanschluß oe15 stellt den restlichen Teil der dritten optischen Verbindung OV3 dar. Die vierte optische Verbindung OV4 dagegen erstreckt sich vom fünfzehnten optischen Zuleitungsanschluß oi15 bzw. externen optischen Verteileranschluß ir15 über einen elften optischen Verteilerleiter VL11 zum k+2-ten internen optischen Verteilerausgang erk+2. Der k+2-te interne optische Verteilerausgang erk+2 ist über den n-ten Eingang imn und den ersten Ausgang em1 des ersten steuerbaren Schaltmoduls OSM1 an den k+1-ten internen optischen Verteilereingang irk+1 angeschlossen, welcher über einen zwölften optischen Verteilerleiter VL12 mit dem vierzehnten externen optischen Verteilerausgang er14 bzw. mit dem vierzehnten Ableitungsanschluß oe14 verbunden ist.

Der erfindungsgemäße optische Crossconnect OXC ist somit auf einfache Art und Weise um mehrere dynamisch schaltbare optische Verbindungen OV3,OV4 erweiterbar, zumal bei ein Erweiterung des optischen Crossconnects OXC beispielsweise um ein zusätzliches steuerbares Schaltmodul OSM die an den optischen Schnittstellen OS angeschlossenen optischen Zu- und Ableitungsfasern OZF, OAF nicht abgetrennt bzw. "umgesteckt" werden müssen, sondern nur innerhalb des optischen Crossconnects OXC die hierzu vorgesehen internen optischen Verteilereingänge bzw. Verteilerausgänge irk+1 bis irn und erk+1 bis ern neu beschaltet werden müssen. Hierzu wird bei der "Neubeschaltung" der internen optischen Verteilereingänge bzw. Verteilerausgänge irk+1 bis irn und erk+1 bis ern die Kenntnis der geschalteten optischen Verteilerleiter VL1 bis VL13 innerhalb des optischen Verteilerrahmens VR durch das Netzmanagementsystem NMS insofern vorteilhaft berücksichtig, daß dem Wartungspersonal am Verteilerrahmen VR mit Hilfe von beispielsweise an den externen und internen Verteilereingängen (ir1 bis irn) und Verteilerausgängen (er1 bis ern) angebrachten Leuchtdioden - nicht in Figur 2 dargestellt - die jeweils zu verbindenden internen optischen Verteilereingänge bzw. Verteilerausgänge irk+1 bis irn und erk+1 bis ern angezeigt werden, die mit den Ausgängen em1 bis emn und Eingängen im1 bis imn der steuerbaren Schaltmodule OSM zu verbinden sind. Hierdurch wird die Wahrscheinlichkeit einer fehlerhaften Konfiguration des optischen Crossconnects durch "falsch" gesteckte optische Verteilerleiter VL erheblich reduziert.

Desweiteren kann gegebenenfalls eine Kaskadierung von steuerbaren Schaltmodulen OSM,OSM1,OSM2 vorgenommen werden, um den Grad der Blockierungsfreiheit des optischen Crossconnects OXC zu erhöhen.

## Patentansprüche

1. Optischer Crossconnect (OXC) mit mindestens einem optische Eingänge (im1 bis imn) und Ausgänge (em1 bis emn) aufweisenden steuerbaren Schaltmodul (OSM),
**dadurch gekennzeichnet,**
**daß** ein über ein Netzmanagementsystem (NMS) überwachbarer, externe und interne optische Verteilereingänge (irk+1 bis irn,ir1 bis irk) sowie externe und interne optische Verteilerausgänge (er1 bis erk, erk+1 bis ern) aufweisender Verteilerrahmen (VR) vorgesehen ist, dessen externen und internen optischen Verteilereingänge (ir1 bis irn) und Verteilerausgänge (er1 bis ern) innerhalb des Verteilerrahmens (VR) über mehrere jeweils einen zusätzlichen elektrischen Leiter zur Verifizierung der optischen Verbindung (OV) aufweisende optische Verteilerleiter (VL1 bis VL13) verbindbar sind, und
**daß** mehrere der internen Verteilerausgänge (erk+1 bis ern) an die Eingänge (im1 bis imn) des steuerbaren Schaltmoduls (OSM) und die Ausgänge (em1 bis emn) des steuerbaren Schaltmoduls (OSM) an mehrere interne Verteilereingänge (irk+1 bis irn) angeschlossen sind, wobei das steuerbare Schaltmodul (OSM) unter Berücksichtigung der durch das Netzmanagementsystem (NMS) verifizierten optischen Verbindungen (OV) gesteuert wird.

2. Optischer Crossconnect nach Anspruch 1,
**dadurch gekennzeichnet,**
**daß** dem Netzmanagementsystem (NMS) aufgrund der Verifizierung Informationen über die von externen optischen Verteilereingängen (ir1 bis irk) auf interne optische Verteilerausgänge (erk+1 bis ern) und über die von internen optischen Verteilereingängen (irk+1 bis irn) auf externe optische Verteilerausgänge (er1 bis erk) geschalteten optischen Verbindungen (OV) vorliegen, welche zur Steuerung des steuerbaren Schaltmoduls (OSM) derartig berücksichtigt werden, daß zum automatischen Durchschalten einer optischen Verbindung von einem festgelegten externen optischen Verteilereingang (ir1 bis irk) auf einen festgelegten externen optischen Verteilerausgang (er1 bis erk) mit Hilfe des Netzmanagementsystems (NMS) der über eine optische Verbindung (OV) an den festgelegten externen optischen Verteilereingang (ir1 bis irk) angeschlossene interne optische Verteilerausgang (erk+1 bis ern) und der über eine weitere optische Verbindung (OV) an den festgelegten externen optischen Verteilereingang (ir1 bis irk) angeschlossene interne optische Verteilereingang (irk+1 bis irn) ermittelt wird und mit Hilfe des steuerbaren Schaltmoduls (OSM) der ermittelte interne optische Verteilerausgang (erk+1 bis ern) auf den ermittelten internen Verteilereingang (irk+1 bis irn) durchgeschaltet wird.

3. Optischer Crossconnect nach Anspruch 1 oder 2,
**dadurch gekennzeichnet,**
**daß** der optische Crossconnect (OXC) optische Schnittstellen (OS) aufweist, die zum Anschluß der externen optischen Verteilereingänge (ir1 bis irk) des Verteilerrahmens (VR) an optische Zuleitungsfasern (OZF) und der externen optischen Verteilerausgänge (er1 bis erk) an optische Ableitungsfasern (OAF) vorgesehen sind.

4. Optischer Crossconnect nach einem der Ansprüche 1 bis 3,
**dadurch gekennzeichnet,**
**daß** die externen und internen optischen Verteilereingänge und Verteilerausgänge (ir1 bis irn, er1 bis ern) des Verteilerrahmens (VR) als kombinierte opto-elektrische Anschlüsse ausgestaltet sind.

5. Optischer Crossconnect nach einem der Ansprüche 1 bis 4,
**dadurch gekennzeichnet,**
**daß** bei einer geschalteten Verbindung (OV) eines externen optischen Verteilereinganges (ir1 bis irk) auf einen internen optischen Verteilerausgang (erk+1 bis ern) über einen optischen Verbindungsleiter (VL1 bis VL13) durch das beim Stecken der optischen Verbindung (OV) hervorgerufene Erstellen einer zusätzlichen elektrischen Verbindung dem Netzmanagementsystem (NMS) die geschaltete optische Verbindung (OV) angezeigt wird.

6. Optischer Crossconnect nach einem der Ansprüche 1 bis 5,
**dadurch gekennzeichnet,**
**daß** zur Erweiterung der automatisch steuerbaren optischen Schnittstellen (OS) des optischen Crossconnects (OXC) zusätzlich mehrere steuerbare Schaltmodule (OSM1, OSM2) parallel und/oder in Serie schaltbar sind.

7. Optischer Crossconnect nach einem der Ansprüche 1 bis 6,
**dadurch gekennzeichnet,**
**daß** in dem optischen Crossconnect (OXC) zur Visualisierung der elektrischen Verbindung oder als Unterstützung beim manuellen Stecken einer optischen Verbindung (OV) vorzugsweise optische Leuchtdioden vorgesehen sind.

## Claims

1. Optical cross-connect (OXC) having at least one controllable switching module (OSM) which has optical inputs (im1 to imn) and outputs (em1 to emn),
**characterized**
**in that** a distribution rack (VR) is provided which can be monitored via a network management system (NMS) and has external and internal optical distribution inputs (irk+1 to irn, ir1 to irk) as well as external and internal optical distribution outputs (er1 to erk, erk+1 to ern), and whose external and internal optical distribution inputs (ir1 to irn) and distribution outputs (er1 to ern) can be connected within the distribution rack (VR) via a number of optical distribution conductors (VL1 to VL13), which each have an additional electrical conductor for verification of the optical connection (OV), and
**in that** a number of the internal distribution outputs (erk+1 to ern) are connected to the inputs (im1 to imn) of the controllable switching module (OSM), and the outputs (em1 to emn) of the controllable switching module (OSM) are connected to a number of internal distribution inputs (irk+1 to irn), with the controllable switching module (OSM) being controlled taking account of the optical connections (OV) which are verified by the network management system (NMS).

2. Optical cross-connect according to Claim 1,
**characterized**
**in that** information about the optical connections (OV) which are connected from external optical distribution inputs (ir1 to irk) to internal optical distribution outputs (erk+1 to ern), and about the optical connections (OV) which are connected from the internal optical distribution inputs (irk+1 to irn) to external optical distribution outputs (er1 to erk) is available to the network management system (NMS) on the basis of the verification, these optical connections (OV) being the connections which are taken into account in order to control the controllable switching module (OSM), such that, in order to automatically pass on an optical connection from a specific external optical distribution input (ir1 to irk) to a specific external optical distribution output (er1 to erk), the internal optical distribution output (erk+1 to ern) which is connected to the specific external optical distribution input (ir1 to irk) via an optical connection (OV), and the internal optical distribution input (irk+1 to irn) which is connected to the specific external optical distribution input (ir1 to irk) via a further optical connection (OV), are determined with the aid of the network management system (NMS), and the determined internal optical distribution output (erk+1 to ern) is passed on to the determined internal distribution input (irk+1 to irn) with the aid of the controllable switching module (OSM).

3. Optical cross-connect according to Claim 1 or 2,
**characterized**
**in that** the optical cross-connect (OXC) has optical interfaces (OS) which are provided for connection of the external optical distribution inputs (ir1 to irk) of the distribution rack (VR) to optical supply line fibers (OZF), and of the external optical distribution outputs (er1 to erk) to optical output fibers (OAF).

4. Optical cross-connect according to one of Claims 1 to 3,
**characterized**
**in that** the external and internal optical distribution inputs and distribution outputs (ir1 to irn, er1 to ern) of the distribution rack (VR) are in the form of combined optoelectrical connections.

5. Optical cross-connect according to one of Claims 1 to 4,
**characterized**
**in that,** in the case of a switched connection (OV) of an external optical distribution input (ir1 to irk) to an internal optical distribution output (erk+1 to ern) via an optical distribution conductor (VL1 to VL13), the switched optical connection (OV) is indicated to the network management system (NMS) by producing an additional electrical connection as a result of the insertion of the optical connection (OV).

6. Optical cross-connect according to one of Claims 1 to 5,
**characterized**
**in that** a number of controllable switching modules (OSM1, OSM2) may also be connected in parallel and/or in series in order to enlarge the automatically controllable optical interfaces (OS) of the optical cross-connect (OXC).

7. Optical cross-connect according to one of Claims 1 to 6,
**characterized**
**in that** optical light-emitting diodes are preferably provided in the optical cross-connect (OXC), in order to visualize the electrical connection or to assist the manual insertion of an optical connection (OV).

## Revendications

1. Répartiteur optique «Crossconnect» (OXC) avec au moins un module de circuit (OSM) susceptible d'être commandé, présentant des entrées optiques (im1 à imn) et des sorties optiques (em1 à emn),
**caractérisé en ce que,**
il est prévu un cadre distributeur (VR), contrôlable par un système de gestion de réseau (NMS), présentant des entrées distributrices optiques externes et internes (irk+1 à irn, ir1 à irk), ainsi que des sorties distributrices optiques externes et internes (er1 à erk, erk+1 à ern), dont les entrées distributrices (ir1 à irn) et sorties distributrices (er1 à ern), optiques, externes et internes à l'intérieur du cadre distributeur (VR) peuvent être reliées par l'intermédiaire de plusieurs conducteurs distributeurs optiques (VL1 à VL13) présentant à chaque fois un conducteur électrique supplémentaire pour vérifier la connexion optique (OV), et
**en ce que** plusieurs des sorties distributrices internes (erk+1 à ern) sont raccordées aux entrées (im1 à imn) du module de circuit (OSM) susceptible d'être commandé et les sorties (em1 à emn) du module de circuit (OSM) susceptible d'être commandé sont raccordées à plusieurs entrées distributrices internes (irk+1 à irn), le module de circuit (OSM) susceptible d'être commandé est commandé en tenant compte des liaisons optiques (OV) vérifiées par le système de gestion de réseau (NMS).

2. Répartiteur optique selon la revendication 1,
**caractérisé en ce que,**
au niveau du système de gestion de réseau (NMS) en raison de la vérification, il existe des informations sur les liaisons optiques (OV) établies entre des entrées distributrices optiques externes (ir1 à irk) et des sorties distributrices optiques internes (erk+1 à ern) et sur les liaisons optiques établies entre des entrées distributrices optiques internes (irk+1 à irn) et des sorties distributrices optiques externes (er1 à erk), lesquelles liaisons sont prises en compte pour commander le module de circuit (OSM) susceptible d'être commandé, de telle sorte que pour interconnecter automatiquement une liaison optique partant d'une entrée distributrice optique externe fixée (ir1 à irk) à une sortie distributrice optique externe fixée (er1 à erk) à l'aide du système de gestion de réseau (NMS), on détermine la sortie distributrice optique interne (erk+1 à ern) raccordée par l'intermédiaire d'une liaison optique (OV) à l'entrée distributrice optique externe fixée (ir1 à irk) et l'entrée distributrice optique interne (irk+1 à irn) raccordée par l'intermédiaire d'une autre liaison optique (OV) à l'entrée distributrice (ir1 à irk) optique externe fixée, et la sortie distributrice optique interne déterminée (erk+1 à ern) est interconnectée à l'entrée distributrice (irk+1 à irn) interne déterminée à l'aide du module de circuit (OSM) susceptible d'être commandé.

3. Répartiteur optique selon la revendication 1 ou 2,
**caractérisé en ce que,**
le répartiteur optique (OXC) présente des interfaces optiques (OS), qui sont prévus pour le raccordement des entrées distributrices optiques externes (ir1 à irk) du cadre distributeur (VR) à des fibres optiques d'amenée (OZF) et des sorties distributrices optiques externes (re1 à erk) à des fibres optiques de sortie (OAF).

4. Répartiteur optique selon l'une quelconque des revendications 1 à 3,
**caractérisé en ce que,**
les entrées et sorties distributrices, optiques, externes et internes (ir1 à irn, er1 à ern) du cadre distributeur (VR) sont conçues sous la forme de raccords opto-électriques combinés.

5. Répartiteur optique selon l'une quelconque des revendications 1 à 4,
**caractérisé en ce que,**
dans le cas d'une liaison (OV) établie entre une entrée distributrice optique externe (ir1 à irk) à une sortie distributrice optique interne(erk+1 à ern) par l'intermédiaire d'un conducteur de liaison optique (VL1 à VL13), la liaison électrique branchée (OV) est indiquée par l'établissement d'une liaison optique supplémentaire au système de gestion de réseau (NMS), provoqué lors de l'enfichage de la liaison optique (OV).

6. Répartiteur optique selon l'une quelconque des revendication 1 à 5,
**caractérisé en ce que,**
pour étendre les interfaces optiques (OS) du répartiteur optique (OXC), susceptibles d'être commandées automatiquement, plusieurs modules de circuit (OSM1, OSM2) susceptible d'être commandés, peuvent être en outre branchés en parallèle et/ou en série.

7. Répartiteur optique selon l'une quelconque des revendication 1 à 6,
**caractérisé en ce que,**
l'on prévoit de préférence des diodes lumineuses optiques dans le répartiteur optique (OXC) afin de visualiser la liaison électrique ou à titre d'assistance pour l'enfichage manuel d'une liaison optique (OV).
